# EUROPÄISCHE PATENTSCHRIFT

(11) **EP 1 196 794 B1**
(45) Veröffentlichungstag und Bekanntmachung des Hinweises auf die Patenterteilung: **16.06.2004**
(21) Anmeldenummer: 00956069.9
(22) Anmeldetag: 06.07.2000
(51) Int. Cl.: G02B 5/32, G03H 1/04

(54) **Verfahren und Vorrichtung zur Herstellung von Bildschirmhologrammen**
Method and device for producing screen holograms
Procédé et dispositif pour produire des hologrammes d'écran

(30) Priorität: 21.07.1999 DE 19934162
(43) Veröffentlichungstag der Anmeldung: 17.04.2002
(73) Patentinhaber: EADS Deutschland GmbH, 81663 München (DE)
(72) Erfinder: HALLDORSSON, Thorsteinn, D-81927 München (DE)
(86) Internationale Anmeldenummer: PCT/DE2000/002220
(87) Internationale Veröffentlichungsnummer: WO 2001/007942

(56) Entgegenhaltungen:
- DE-A- 4 038 308
- DE-C- 19 504 047
- US-A- 4 500 163
- US-A- 4 863 225
- US-A- 5 926 294

## Beschreibung

Die Erfindung betrifft ein Verfahren und eine Vorrichtung zur Herstellung von Bildschirmhologrammen, gemäß den Oberbegriffen der Patentansprüche 1, und 14.

Bildschirmhologramme, die als holografische Abbilder von reellen, weißen Bildschirmen oder Bildschirmleinwänden hergestellt und mit Lasern in den Grundfarben Rot Grün und Blau (rgb) aufgenommen werden, haben den Vorteil, daß sie nur in einem engen Spektralbereich um die Aufnahmewellenlänge und gleichzeitig nur innerhalb eines sehr begrenzten Projektionswinkels um die Einfallsrichtung des Referenzstrahles bei der vorhergehenden Hologrammaufnahme wirksam sind. Die Funktionsweise solcher Schirme bzw. holografischer Bildschirme ist in den deutschen Patentanmeldungen Nr. 19700162.9 und Nr. 19703592.2 ausführlich beschrieben.

Als Lichtquellen für die Projektion können vor allem rgb-Laser im Dauerstrichbetrieb und gepulstem Betrieb sowie rgb-Leuchtdioden verwendet werden. Der Bildaufbau kann wahlweise durch das serielle Scannen eines kollimierten Laserstrahles oder durch die Abbildung eines Bildmodulators im aufgeweiteten Strahl eines Lasers oder einer Leuchtdiode auf den Schirm durchgeführt werden. Holografische Bildschirme können sowohl für Aufprojektion als auch für Rückprojektion hergestellt werden. Wegen ihrer Wellenlängen- und Richtungsselektivität können selbst in Tageslichtumgebung helle, kontrastreiche und farbtreue Bilder auf Bildschirmhologramme projiziert werden. Der Projektor mit den schmalbandigen Lichtquellen wird an den Strahlursprung des divergenten Referenzstrahles plaziert. Nur von dort aus wird das Projektionslicht effizient aus dem Hologramm zum Zuschauer herausgebeugt, wobei z.B. das diffuse, breitbandige Umgebungslicht aus allen anderen Einfallsrichtungen das Bildschirmhologramm ungehindert durchqueren kann.

In dem US-Patent Nr. 4.500.163 ist z. B. ein holografischer Projektionsschirm offenbart, der eine Anordnung von Teilschirmflächen aufweist. Jede Teilschirmfläche wird durch ein Hologramm gebildet, bei dessen Aufnahme ein Diffuser als Objekt mittels eines Objektivstrahls und eines Referenzstrahls in einer Photoplatte holografisch abgebildet wird. Damit soll für großflächige, halbrunde Projektionsschirme eine specklefreie Abbildung möglich werden.

Das US Patent 5,926,294 zeigt ebenfalls die Herstellung eines Hologrammelements, in dem eine Diffuserplatte als Objekt holografisch abgebildet ist. Die Hologrammelemente werden zu einem Projektionsschirm zusammengesetzt.

Für die Wiedergabe bzw. die Projektion von Bildern auf Bildschirmhologramme werden z.B. rgb-Laser verwendet, wie sie in "RGB Optical Parametric Oscillator Source", K. Snell et al, Aerosense 99 und in den Patentschriften DE 195 04 047 und DE 44 32 029 beschrieben werden.

Die möglichen Anwendungen von Bildschirmhologrammen erstrecken sich über das weite Gebiet von kleinen Displays, z.B. für nur eine einzige Person in Fahrzeugen und Flugzeugen oder an Arbeitsplätzen im Büro, bis zu Großflächenschirmen für mehrere Zuschauer bei Veranstaltungen.

Die kleineren Displays können mit frequenzstabilen rgb-Dauerstrichlasern aufgenommen werden. Nachteilhaft sind dabei die hohen Anforderungen an die Stabilität des Lasers und des Strahlenganges und der damit verbundene große Aufwand, der mit hohen Kosten verbunden ist.

Eine Bilddarstellung auf großen Bildschirmhologramme, die unabhängig vom Umgebungslicht ist, wäre z.B. für verschiedenste Anwendungen im Heim- und Bürobereich, für Fernsehen, Computer, elektronisches Kino und für Vorführungen in Vortragssälen, Kino und im Freilufttheater sehr attraktiv. Jedoch bereitet die Herstellung von größeren Bildschirmen, z.B. in der Größe von Schreibmaschinenpapier (DINA4) oder größer, erhebliche technische Schwierigkeiten.

Erstens ist die Ausgangsleistung der stärksten Dauerstrichlaser für die Hologrammaufnahmen heute nur auf einige Watt limitiert, was bei Belichtung der besonders geeigneten Silberhalogenid- und Photopolymermateralien ab 1 m ² Größe eine Belichtungszeit von mehreren zehn Minuten erfordert. Für diese langen Belichtungszeiten sind die Anforderungen an die mechanische und thermische Stabilität des Materials, an die optischen Komponenten des Strahlengangs und an die Frequenzstabilität des Lasers besonders hoch.

Zweitens muß der Objekt- und Referenzstrahl bei der Hologrammaufnahme auf Kosten der Lichtleistung über die Größe des Bildschirmes und des Hologramms aufgeweitet werden, denn die radiale Intensitätsverteilung ist über den Laserstrahl nicht konstant, sondern folgt einer Gaußverteilung, die eine starke Aufweitung notwendig macht um eine möglichst homogene Beleuchtung über die Fläche der Hologramme zu erzielen. Wenn zur Schaffung eines großen Bildschirmhologramms mehrere Bildschirmhologramme aneinandergefügt werden, ist der Intensitätsabfall zu den Rändern der einzelnen belichteten Hologramme besonders störend, weil dann ein periodisches Schattenmuster den ganzen Bildschirm bei der Projektion durchzieht.

Drittens bereitet die Einbelichtung von den drei rgb-Farben dreier Laser in das gleiche Hologramm Schwierigkeiten, da eine gleichmäßige Belichtung aller drei Laser über eine größere Fläche kaum erzielt werden kann. Da die Wellenlängen der Laser deutlich unterschiedlich sind, ergeben sich Unterschiede in der Strahltransmission durch Brechung, Beugung und Streuung an verschiedenen Stellen des gesamten Strahlenganges, was zu ungleichmäßiger Farbdarstellung führt und bei einer Abbildung über eine ausgedehnte Fläche nur schwer zu beheben ist.

Es ist daher die Aufgabe der vorliegenden Erfindung, ein Verfahren, eine Vorrichtung und ein Lasersystem zu schaffen, das die einfache Herstellung sowohl kleiner als auch großflächiger Bildschirmhologramme hoher Qualität ermöglicht. Weiterhin soll ein Bildschirmhologramm geschaffen werden, das auch großflächig realisierbar ist, ohne daß die Bildqualität bei der Projektion darunter leidet.

Diese Aufgabe wird gelöst durch das Verfahren und die Vorrichtung zur Herstellung von Bildschirmhologrammen gemäß den Patentansprüchen 1 bzw. 14. Weitere vorteilhafte Merkmale, Aspekte und Details der Erfindung ergeben sich aus den abhängigen Ansprüchen, der Beschreibung und den Zeichnungen.

Bei dem erfindungsgemäßen Verfahren wird ein realer Bildschirm mit schmalbandigem Licht beleuchtet um ein Hologramm des realen Bildschirms zu erzeugen, wobei eine Vielzahl von Einzelaufnahmen durchgeführt wird, bei denen jeweils nur ein Teilbereich des realen Bildschirms beleuchtet wird, so dass sich durch Zusammensetzung und/oder Überlagerung der Einzelaufnahmen das Bildschirmhologramm des gesamten Bildschirms ergibt. Die Beleuchtung erfolgt mit einem scannenden, gepulsten Laserstrahl. Dadurch sind jeweils nur sehr kurze Belichtungszeiten möglich, so dass Störungen bei der Betichtung z. B. durch Erschütterungen oder andere Instabilitäten vermieden werden. Weiterhin ergeben sich keine Intensitätsverminderungen am Rand oder periodische Schattenmuster. Eine gleichmäßige Farbdarstellung auf großen Flächen wird möglich.

Die Pulsdauer ist z. B. derart bemessen, dass die Bewegung des Laserstrahls über den Bildschirm keinen Einfluss auf die Interferenz der Lichtwellen im Hologramm hat. Bevorzugt entsprechen die aufgenommenen Teilbereiche des Bildschirms der Größe von Bildpixeln oder größer. Insbesondere kann die Belichtung mit einem gepulsten, diodengepumpten Festkörperdauerstrichlaser erfolgen.

Bevorzugt erfolgt eine Frequenzkonversion in einen oder mehrere der Wellenlängenbereiche rot, grün, blau. Beispielsweise wird ein Kontakthologramm oder ein Bildschirmeberienhologramm erzeugt. Auch kann ein Transmissionshologramm oder ein Reflexionshologramm erzeugt werden. Bevorzugt werden Laserstrahlen mit einer Kohärenzlänge erzeugt, die größer ist als die Differenz der Lichtwege zwischen Objektstrahl und Referenzstrahl. Scangeschwindigkeit und Pulsdauer sind z.B. so aufeinander abgestimmt, daß die Bewegung des Laserstrahls während eines Pulses kleiner als 1/10 der Wellenlänge ist.

Vorzugsweise erfolgt ein mehrmaliges Abscannen der Bildschirmfläche mit jeweils phasenverschobenem Laserstrahl. Die Verteilung der Belichtung kann gemessen werden, um bei einem nachfolgenden Belichtungszyklus die Belichtung zu korrigieren. Auch können mehrere Belichtungen mit senkrecht zueinander polarisierten Licht- oder Laserstrahlen durchgeführt werden, um zwei voneinander unabhängige Schirmbilder in dem Hologramm zu erzeugen. Weiterhin können mehrere Belichtungen mit veränderten Aufnahmeparametern, wie beispielsweise verändertem Ort des realen Bildschirms oder verändertem Ursprungsort des Referenzstrahls, durchgeführt werden. Bevorzugt erfolgt die Belichtung gleichzeitig durch Licht- oder Laserstrahlen der Grundfarben rot, grün, blau, die auf einer Strahlachse koaxial justiert sind.

Die erfindungsgemäße Vorrichtung zur Herstellung von Bildschirmhologrammen hat eine schmalbandige Lichtquelle zur Beleuchtung eines realen Bildschirms, die z.B. so angeordnet ist, daß sich das vom Bildschirm ausgehende Licht mit einem Referenzstrahl überlagert um ein Hologramm des Bildschirms zu erzeugen, wobei weiterhin eine Scanvorrichtung zum Führen der von der Lichtquelle ausgehenden Lichtstrahlung über den Bildschirm vorgesehen ist, wobei die Lichtquelle gepulste Lichtstrahlung erzeugt. Dadurch können auch großflächige Bildschirmhologramme hoher Qualität einfach hergestellt werden.

Die Lichtquelle erzeugt vorzugsweise gleichzeitig rote, grüne und blaue Laserstrahlung. Die Lichtquelle umfaßt insbesondere ein Lasersystem, wie es nachfolgend beschrieben wird.

Das verwendete Lasersystem zur Herstellung von RGB-Strahlen ist insbesondere für die Herstellung von Bildschirmhologrammen geeignet und umfaßt:
eine Laserstrahlquelle zur Erzeugung von Laserstrahlung,
eine Frequenzkonversionseinrichtung, und
einen optisch-parametrischen Oszillator, wobei die die Laserstrahlquelle einen gepulsten, q-geschalteten Laser-Oszillator umfaßt.

Mit diesem Lasersystem können großflächige Bildschirmhologramme zur Farbprojektion mit hoher Bildqualität auf einfache Weise erzeugt werden.

Bevorzugt ist der q-geschaltete Laser-Oszillator ein Einfrequenz IR-Oszillator. Die Laserstrahlquelle hat z.B. einen Laserverstärker, der dem q-geschalteten Laseroszillator nachgeschaltet ist. Das erfindungsgemäße Bildschirmhologramm hat ein holografisches Aufnahmematerial, in dem ein realer Bildschirm als Hologramm gespeichert ist, wobei das Bildschirmhologramm eine Vielzahl von Einzelaufnahmen enthält, in denen jeweils ein Teilbereich des realen Bildschirms als Hologramm abgebildet ist, wobei sich das gesamte Bild des Bildschirms aus den zusammengesetzten und/oder überlagerten Einzelaufnahmen ergibt. Dadurch ergibt sich eine hohe Qualität bei der Bildwiedergabe, selbst bei einer großflächigen Realisierung des Bildschirmhologramms.

Bevorzugt ist das Bildschirmhologramm nach dem erfindungsgemäßen Verfahren hergestellt.

Nachfolgend wird die Erfindung anhand der Figuren beispielhaft beschrieben, in denen
- Fig. 1: eine Anordnung zur Aufnahme eines Refexions-Bildschirmhologramms als Kontakthologramm schematisch in Seitenansicht zeigt;
- Fig. 2: eine Draufsicht auf die Anordnung gemäß Figur 1 zeigt;
- Fig. 3: eine Anordnung zur Aufnahme eines Transmissions-Bildschirmhologramms als Kontakthologramm schematisch zeigt;
- Fig. 4: eine Anordnung zur Aufnahme eines Bildschirm-Reflexionshologramm für Aufprojektion zeigt;
- Fig. 5: eine Anordnung zur Aufnahme eines Transmissions-Bildschirmhologramms für Rückprojektion als Bildebenenhologramm zeigt; und
- Fig. 6: ein erfindungsgemäßes Lasersystem schematisch zeigt.

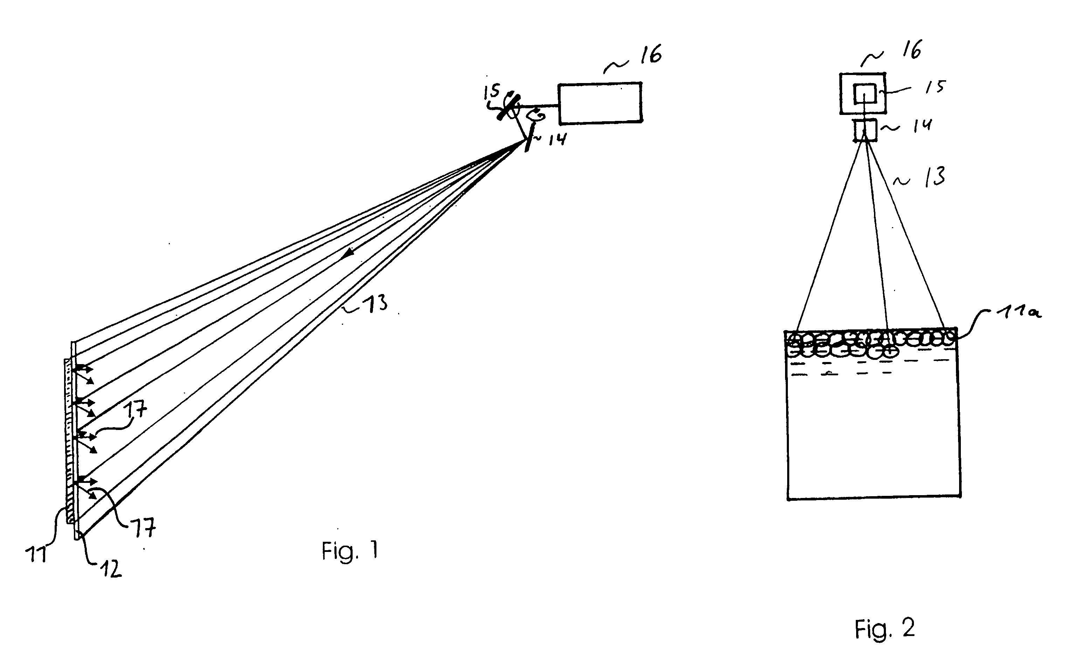

Fig. 1 zeigt schematisch die Aufnahme eines Reflexionshologramms eines reellen Bildschirmes als Kontakthologramm für die spätere Aufprojektion in Seitenansicht. Ein holografisches Aufnahmematerial 12 befindet sich in Kontakt mit einem Bildschirm 11. Ein Laserstrahlbündel 13 aus einem schnell gepulsten Laser 16 wird über das Aufnahmematerial 12 in zwei Achsenrichtungen x und y flächendeckend mit Scannern 14 und 15 gescannt, z.B. mit einem kreisförmig geformten Laserstrahlfleck. In Fig. 2 ist eine Draufsicht auf das holografische Aufnahmematerial 12 dargestellt. Der Laserstrahl 13 beleuchtet sukzessive einen Teilbereich 11a des Aufnahmematerials 12 und des dahinterliegenden Bildschirms 11. Auch anders geformte Laserflecke wie z.B. ein Rechteck können verwendet werden. Ein Teil der auffallenden Laserstrahlung 13 wird vom Hologramm bzw. Aufnahmematerial 12 durchgelassen und fällt auf den reellen Bildschirm 11, der Strahlung 17 als Objektlichtwellen wieder in das Hologramm 12 zurückstreut. Dort treffen die Objektlichtwellen wieder auf den einfallenden Strahl 13 und bilden mit seinen Wellen holographische Interferenzmuster, die durch den Belichtungsprozess im Aufnahmematerial 12 als Hologramm gespeichert werden. Es können verschiedenste Scanfiguren, z.B. Rasterscan, Sinusscan oder Spiralscan verwendet werden.

Das Bildschirmhologramm wird also nicht als ganzes in einem Stück als Abbild des reellen Bildschirmes 11 aufgenommen wird, sondern in einer sehr hohen Zahl von Einzelaufnahmen, in denen jeweils nur kleine Teile 11a des reellen Bildschirmes 11 beleuchtet werden. Das ganze Bild des Bildschirmes 11 ergibt sich dann als Zusammensetzung bzw. Überlagerung der Vielzahl von Einzelaufnahmen, z.B. in der Art von Bildpixeln.

Das erzeugte Bildschirmhologramm ist als Kontakthologramm bzw. als sogenanntes Bildebenenhologramm ausgeführt, bei dem das projizierte Bild bei der Wiedergabe in der Hologrammebene erscheint. Durch das Einbelichten von Schirmen in den Grundfarben Rot, Grün und Blau in die gleiche Hologrammschicht 12 oder in drei aufeinander laminierte Schichten können später auch Farbbilder auf den holografischen Schirm projiziert werden.

Kontakthologramme haben den Vorteil eines einfachen optischen Aufbaus bei der Aufnahme. Das Hologramm wird deshalb, wie in Figur 1 gezeigt, auf den reellen Bildschirm 11, z.B. eine reflektierende Streuscheibe oder transmittierendes Mattglas, im Kontakt aufgelegt und gemeinsam mit dem Referenzstrahl ohne zusätzliche Objektausleuchtung belichtet. Bei der Projektion ist der Winkel des rückgestreuten Projektionslicht aus dem Hologramm 12 in Richtung zum Zuschauer der gleiche wie der des reellen Bildschirmes in Bezug auf den Aufnahme-Lichtstrahl 13.

Die Erfindung basiert auf der Tatsache, daß der holografische Bildschirm bzw. das Hologramm 12 die optischen Eigenschaften der Bildpixel, d.h. Helligkeit (Grauwert), Farbe, Polarisation und Abstrahlwinkel nur einzeln für jedes Pixel vom Schirm wiedergeben muß. Eine optische Verknüpfung zwischen benachbarten Pixeln besteht nicht, und ein Bildschirm als Kontakt- oder Bildebenenhologramm hat nur eine zweidimensionale Struktur. Damit das Hologramm 12 diese Wirkungsweise eines flachen Bildschirmes in der Hologrammebene wiedergeben kann, ist es deshalb nicht zwingend notwendig, den ganzen reellen Bildschirm 11 in einer einzigen Belichtung über eine ausgedehnte Hologrammfläche aufzunehmen, wie es bei. Hologrammen von dreidimensionalen Objekten der Fall ist, sondern der Bildschirm kann als zusammengesetzter oder mosaikartig aufgebauter Film von getrennten Einzelaufnahmen von Teilbereichen 11a eines Bildschirmes ausgebildet sein. Diese Teilbereiche 11a können deshalb bis zu der Größe eines einzelnen Bildpixel verkleinert werden.

Der holografische Bildschirm wird durch Belichtung des reellen größeren Bildschirmes 11 mit einem schnell gepulsten Laserstrahl 13, der über die gesamte Fläche lückenlos gescannt wird, aufgenommen. Damit die Bewegung des Strahles 13 über den Schirm 11 bzw. über das Aufnahmematerial 12 keinen Einfluß auf die Interferenz der Lichtwellen im Hologramm 12 hat, wird sichergestellt, daß einerseits die Pulsdauer des Lasers 16 ausreichend kurz ist, und das andererseits die Kohärenzlänge des Laserlichtes für die Ausbildung der Interferenzen ausreicht. Um eine besonders wirtschaftliche Herstellung des holografischen Schirms zu erreichen, ist die Pulswiederholfrequenz des Lasers 16 und seine mittlere Leistung ausreichend hoch, so daß sich eine kurze Belichtungszeit ergibt.

Geeignete Laser für diese Art von holografischer Belichtung sind z.B. leistungsstarke schnell gepulste diodengepumpte infrarote Festkörperdauerstrichlaser mit nur einer einzigen longitudinalen Mode, deren Strahlung durch Frequenzkonversion in den roten, grünen und blauen Wellenlängenbereich verschoben wird. Das Abscannen der Bildschirmfläche kann mit handelsüblichen Laser-Strahl-Scannern durchgeführt werden.

Die Teilhologramme 11a sind mindestens so groß gewählt, daß keine Störungen, wie Kontrastverminderung, Farbverfälschung und Verminderung der Bildauflösung in der späteren Bildwiedergabe durch Lichtbeugung oder Feinstruktur der Hologramme selbst, auftreten. Solche Störungen sind nicht zu erwarten wenn die Teilhologramme 11a größer sind als die Bildpixel der Projektion. Andererseits kann die Größe und Form des Teilhologramms 11a und die Scangeschwindigkeit so gewählt werden, daß mit den vorgegebenen Betriebsparametern des aufnehmenden Lasers, wie mittlere Leistung und Pulswiederholfrequenz, eine optimale Bestrahlung und homogene Ausleuchtung des Hologramms 12 erreicht wird, ohne daß der Wirkungsgrad der Aufnahme gleichzeitig durch Bewegung des Scanstrahles 13 herabgesetzt wird.

Allgemein muß zur Aufnahme von Objekthologrammen das Objekt selbst mit einem Objektstrahl und das Hologramm mit einem Referenzstrahl beleuchtet werden. Das von dem Objekt gestreute Licht wird dann im Hologrammfilm mit dem Referenzstrahl zur Überlagerung gebracht. Bei der hier gezeigten gepulsten Aufnahme, bei der nur ein Teil 11a des reellen Bildschirmes 11 als Objekt und gleichzeitig ein Teil des Hologramms 12 direkt mit dem gepulsten Referenzstrahl 13 beleuchtet wird, werden die Belichtungen synchron überlagert durchgeführt. Dies läßt sich mit Kontakthologrammen, bei denen der Hologrammfilm 12 direkt auf den reellen Bildschirm 11 aufgelegt wird und der Referenzstrahl 13 sowohl zur Beleuchtung des Hologramms 12 und zur Beleuchtung des Bildschirms 11 verwendet wird, leicht realisieren.

Bei Bildebenenhologrammen wird der Bildschirm mit einer Linse in das Hologramm abgebildet. Damit die Teilbeleuchtung von Bildschirm mit Objektstrahl und Hologramm mit Referenzstrahl sich überlappen, müssen beide Scanstrahlen miteinander bei ihrer Bewegung so synchronisiert werden, daß der abgebildete Fleck vom Bildschirm im Hologramm und der Fleck des Referenzstrahles sich jedesmal decken.

Die Lichtwellen im Objektstrahl und Referenzstrahl müssen sich während der Belichtung im Hologramm kohärent überlagern. Dies bedeutet, daß die Kohärenzlänge des verwendeten Beleuchtungslasers 16 mindestens so groß oder größer sein muß als die Differenz der Lichtwege zwischen den Wellen des Objekt- und Referenzstrahl, die aus einem gemeinsamen Strahl stammen, bis sie sich wieder im Hologramm 12 treffen. Diese Forderung kann im Sinne der Erfindung durch eine entsprechende Auslegung der Strahlführung und Aufbauten der Hologramme mit der Kohärenzlänge der verfügbaren Lasern in Einklang gebracht werden.

Die Bewegung der interferierenden Wellen im Hologramm durch die scannenden Strahlen (Objektstrahl und Referenzstrahl) während der Pulsdauer gegeneinander und gegenüber dem Hologrammfilm beträgt nicht mehr als.Bruchteile der Wellenlänge (< λ/10). Diese Bedingung wird durch eine entsprechende Einstellung der Scangeschwindigkeit im Verhältnis zu der Pulsdauer des Lasers erfüllt. Bei einer Pulsdauer von 10 ns und einer Scangeschwindigkeit von 5 m/sec ist die Bewegung des Strahles z.B. 50 nm was etwa λ/ 10 entspricht.

Bei Scannen mit gepulster Strahlung mit konstanter Leistung von Puls zu Puls, kann eine große Hologrammfläche mit gleichmäßiger mittlerer Intensitätsverteilung abgedeckt werden, jedoch wird die Belichtung, d.h. die Lichtintensität mal Zeit, je nach dem Verhältnis Scangeschwindigkeit zur Pulswiederholfrequenz des Strahles mit Gauß-Intensitätsprofil über die ganze Fläche entlang der Scanspur periodisch moduliert sein. Die Erfindung sieht deshalb weiterhin vor, daß diese periodische lokale Ungleichmäßigkeit der Beleuchtung, sowie auch Inhomogenitäten in der Hologrammdicke, z.B. bei mosaikartiger Verlegung mehrere Hologramme nebeneinander, durch mehrmaliges Abscannen der gleichen Fläche mit phasenverschobenem Scanstrahl, bzw. durch Regelung der Pulsleistung, ausgeglichen werden. Hier nutzt die Erfindung z.T. die Eigenschaft von Hologrammaufnahmen aus, daß in einem einzigen Hologramm mehrere Objektbelichtungen überlappend und unabhängig voneinander gespeichert werden können.

Damit dieser Belichtungsvorgang automatisch ablaufen kann, wird in einer nicht dargestellten Ausführungsform der Erfindung die Verteilung der Belichtung durch einen kalibrierten Rückstreusensor, der im Strahlengang des Beleuchtungslasers koaxial zum gepulsten Belichtungsstrahl angeordnet ist, überwacht. Altenativ dazu können Überwachungskameras die Laserbeleuchtung über die gesamte Hologrammfläche ständig vermessen. Das damit gewonnene Belichtungsmuster kann von einem Microprozessor, bzw. Computer gespeichert und bei nachfolgenden nochmaligen Scanzyklen über die gesamte Hologrammfläche durch Regelung der Laserlichtintensität und Flächenverteilung der Scanfigur zur nachträglichen Korrektur der Belichtung der vorhergehenden Belichtungsmuster verwendet werden.

Nach dem Entwicklungsprozess sind die optischen Eigenschaften des Bildschirms in dem Hologramm 12 gespeichert. Vorzugsweise werden sogenannte dicke Hologramme (10 -20 µm) verwendet, z.B. aus Photopolymer, Dichromatgelatine oder Silber-Halogenid Materia-, lien. Dicke Hologramme haben gegenüber dünnen Hologrammen den Vorteil, daß sie besonders selektiv Licht mit der gleichen Wellenlänge wie bei der Aufnahme herausbeugen, und zwar nur dann, wenn der Einfallswinkel des Rekonstruktionsstrahles der gleiche ist wie der Einfallswinkel des Referenzstrahles bei der Aufnahme.

Die optimale akkumulierte Belichtung der Hologramme ist für jedes Material und für jede Wellenlänge verschieden, z.B. liegt sie für Photopolymermateralien bei etwa 25 mJ/cm², d.h. zur Belichtung von 1 m² mit einem Laser 1 W mittlerer Leistung würden 250 Sekunden oder etwa 4 Minuten benötigt. Bei Silberhalogenidfilmen ist nur eine Belichtung von etwa 0,5 mJ/cm² notwendig, wodurch die Belichtungszeit entsprechend gekürzt werden kann. Bildebenenhologramme sind Aufnahmen von mit Linsen oder Spiegeln abgebildeten Schirmen, die in der Hologrammebene liegen. Der Abstrahlwinkel dieser Hologramme, kann durch die Abbildungsgeometrie erheblich eingeengt werden, mit einer entsprechenden Zunahme der Helligkeit des Bildes, was für viele Anwendungen von großem Vorteil ist.

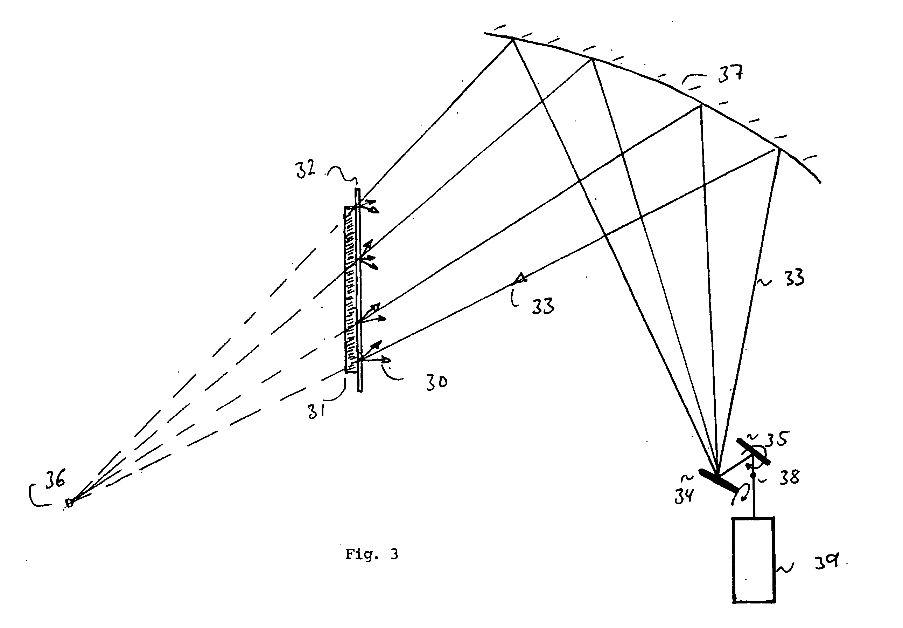

Fig. 3 zeigt eine Aufnahme eines Kontakthologrammes von einem Bildschirm 31 als Transmissionshologramm 32. Hier ist es notwendig, daß ein Referenzstrahlenbündel 33, dessen Strahlengang mit dem Projektionsstrahl bei der späteren Bildwiedergabe zusammenfällt, als konvergentes Teilstrahlenbündel eines gepulsten Lasers 39 auf das Hologramm 32 fällt. Die Interferenzstrukturen, die sich dann im Hologramm 32 durch die Überlagerung von Streulichtes 30 aus dem Schirm 31 mit dem Referenzstrahlbündel 33 ausbilden, entsprechen dann einer Bildwiedergabe in Rückprojektion aus dem Schnitt- bzw Projektionspunkt 36,d.h. der Verlängerung des Strahlenbündels 33. Bei der Projektion steht der Betrachter dann gegenüber dem späteren Projektionspunkt 36 auf der entgegensetzten Seite des Hologramms 12. Die Herstellung eines konvergenten Strahlenbündels aus einem Zweiachsen-Scanner 34 und 35 läßt sich am einfachsten über einen langbrennweitigen Spiegel 37 herstellen, der den Quellenpunkt des Scanners 38 in den Schnittpunkt 36 abbildet. Das Hologramm 32 und der reelle Bildschirm 31 sind dann in einer Schnittebene dieses Strahlenganges des Teilstrahlenbündels 33 plaziert.

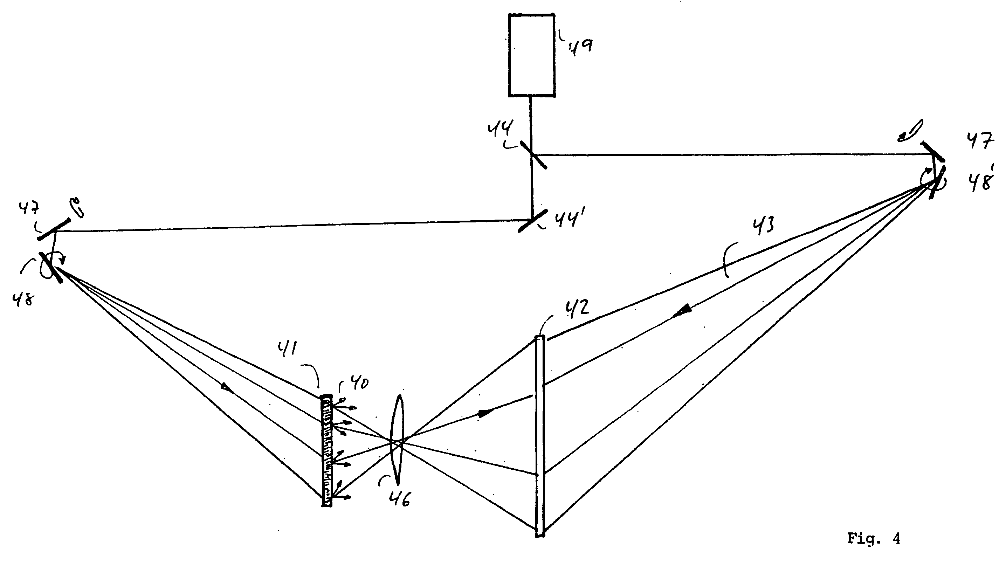

Fig. 4 zeigt eine Aufnahme eines Transmissionshologramms als Bildebenenhologramm für die Rückprojektion. Hier wird ein reeller Bildschirm 41 mit Hilfe einer Linse 46 auf ein Hologramm 42 abgebildet. Gleichzeitig fällt ein Referenzstrahlbündel 43 von der anderen Seite auf das Hologramm 42. Die beiden Scanner mit x-y-Scannerspiegeln 47 und 48 bzw. 47' und 48' werden so synchronisiert, daß die beiden Beleuchtungsflecken des Referenzstrahlbündels 43 und der beleuchteten Fläche 40 des reellen Schirms im Hologramm 41 synchron überlagert werden. Die Beleuchtungsstrahlen für den reellen Schirm 42 und für das Referenzstrahlbündel 43 werden mittels Teilerspiegel 44 und Umlenkspiegel 44' aus dem gemeinsamen Laser 49 geteilt und umgelenkt.

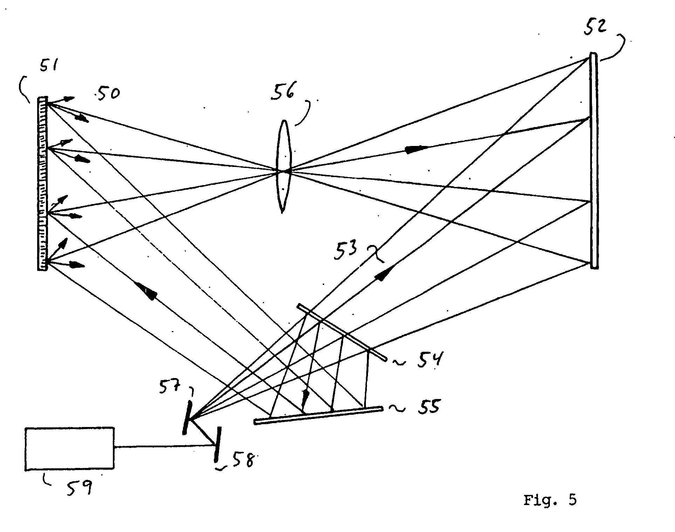

Fig. 5 zeigt eine Aufnahme eines Bildebenenhologramms als Reflexionshologramm für die spätere Aufprojektion. Dabei wird ein reeller Schirm 51 in eine Hologrammebene 52 mit Hilfe einer Linse 56 abgebildet und das Abbild wird dort mit einem Referenzstrahlenbündel 53 synchron überlagert. Mit Hilfe eines Teilerspiegels 54 kann ein Teil des Referenzstrahlbündels 53 für die Ausleuchtung des reellen Schirmes 51 verwendet werden. Zusätzliche Hilfsspiegel sind notwendig um die Raumspiegelung der Linse 56 zu kompensieren, was hier für die eine Raumebene am Beispiel des Hilfspiegels 55 gezeigt wird. Zur gleichzeitigen Abtastung von Schirm 51 und Hologramm 52 dient hier die Verwendung von nur einem Scannerspiegelpaar 57 und 58 vor dem gepulsten Laser 59.

Um die Aufnahme von drei- oder mehrfarbigen Schirmen z.B. der rgb-Farben, zu erleichtern, werden die Strahlen von drei rgb-Lasern oder eines Lasers mit dreifarbiger rgb-Emission auf eine gleiche Strahlachse koaxial justiert. Die drei Farben sind während eines gemeinsamen Scannes und Belichten des Schirmes und des Hologrammes mit dem Referenzstrahl, gleichzeitig am reellen Bildschirm. Der Referenzstrahl stellt ebenfalls eine Überlagerung von drei rgb-Teilstrahlen dar.

Diese gleichzeitige Aufnahme aller drei rgb-Farben im gleichen Hologramm setzt natürlich voraus, daß das Hologramm-Material für alle Farben photoempfindlich ist. Dies gilt aber für eine Reihe von Photopolymer und Silberhalogenidfilme, sowie für einzelne Dichromatgelatine.

Zur Aufnahme der hier beschriebenen Bildschirmhologramme mit schnell gepulster rgb-Beleuchtung werden moderne diodengepumpte, q-geschaltete Infrarot-Festkörperlaser mit einer Emission in nur einer longitudinalen Resonatormode verwendet. Die Laser werden durch klassische Frequenzkonversion wie Frequenzverdopplung, optisch parametrischen Prozessen und Summen- und Differenzfrequenzbildung in verschiedenen nicht-linearen Kristallen auf die rgb-Emission bei den geeigneten rgb Wellenlängen eingestellt..

Es können getrennte Laser für die einzelnen Farben verwendet werden, aber vorteilhafter ist es, Laser zu verwenden, die einen einzigen gemeinsamen q-geschalteten Laser-Oszillator besitzen. Die Laser haben nachgeschaltete, gemeinsame Verstärkerstufen und einen gemeinsamen optisch-parametrischem-Oszillator, der die Grundwelle des Lasers bzw. seine frequenzverdoppelte Welle in zwei Teilwellen längerer Wellenlänge (Idler und Signalwelle) aufspaltet. Eine anschließende Strahltrennung dient zur Trennung der Primärstrahlung in verschiedene Strahlzweige, wo verschiedene weitere Frequenzkonversionen wie Frequenzverdopplung, Frequenzsummation und - Differenzbildung zur Herstellung der einzelnen Farben stattfinden.

Ein wesentlicher Vorteil eines solchen gemeinsamen Primärlasers liegt darin, daß die Emission aller drei rgb-Farbzweige vollkommen synchron mit gleicher Pulswiederholfrequenz, in fester Phase und mit vergleichbarer spektraler Breite, Kohärenzlänge und Strahldivergenz abgegeben wird. Dies ermöglicht eine gemeinsame Aufnahme von den Bildschirmhologrammen in allen Farben gleichzeitig.

RGB-Laser, die auf diesem Grundkonzept eines gemeinsamen Primärlasers mit nachfolgender Frequenzkonversion in passiven nicht-linearen Kristallen bis zu den drei rgb-Farben beruhen, werden z.B. in der oben genannten Patentschrift DE 195 04 047, "Lasersystem für Farbbildprojektion" und in der Patentschrift DE 44 32 029, "Lasergestützte Farbbildanzeige- und Projektionsvorrichtung" beschrieben. Die dort beschriebenen diodengepumpten Festkörperlaser werden im mode-locked Dauerstrichbetrieb betrieben. Sie haben aber bezüglich der Aufnahme von Bildschirmhologrammen den Nachteil, daß sie ein breites Frequenzspektrum einzelner longitudinaler Moden d.h. geringer Kohärenzlänge in der Primäremission sowie nach der Frequenzkonversion emittieren.

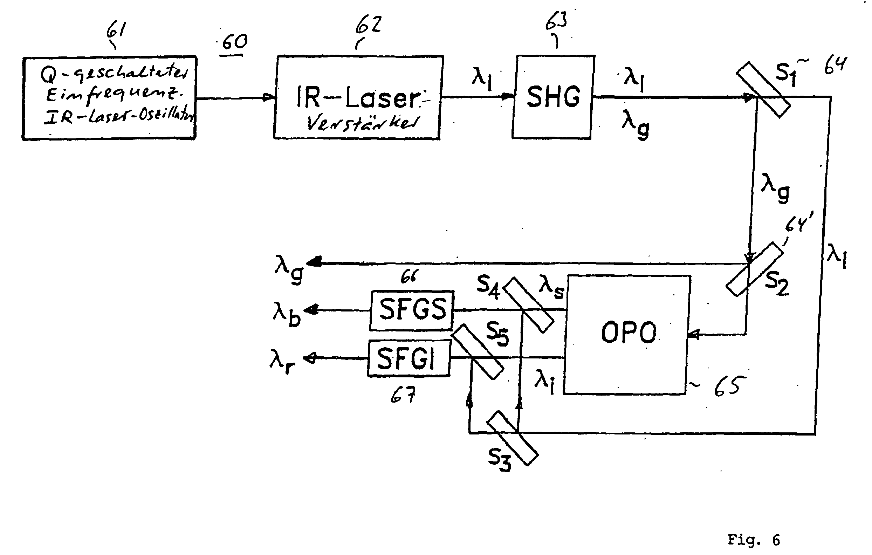

Fig. 6 zeigt einen Laser, der für die oben beschriebenen gepulsten Bildschirmhologrammaufnahmen besonders geeignet ist. Dabei ist anstatt eines mode-locked-lasers ein schnell gepulster, q-geschalteter-Einfrequenz-IR-Oszillator 61 eines Nd-Lasers wie Nd:YLF, Nd:YAG oder Nd:YVO vorgesehen. D.h., der Oszillator 61 hat eine einzige longitudinale Mode. Die Leistungsverstärkung der Pulse erfolgt in einem Festkörperlaserverstärker 62 gleicher Materialien. Ein optisch-parametrischer-Oszillator 65 ist für eine anschließende Frequenzaufspaltung vorgesehen. Dieser kann über die Temperatur des nichtlinearen Materials und/oder durch Einstellung der Achsenwinkel im Strahlengang in seiner Wellenlänge eingestellt werden. Dadurch kann bei der anschließenden Frequenzkonversion auch die Wellenlänge der rgb-Nutzstrahlung eingestellt werden. Dies ist vorteilhaft, um die Aufnahmewellenlänge an die spätere Wiedergabewellenlänge genau anzupassen. Es erfolgt auch eine Frequenzverdopplung und Summenfrequenzbildung. Der Oszillator 61 ist ein q-geschalteter Nd:YAG im longitudinalen Einmodenbetrieb. Der Laserverstärker 62 ist eine Nd:YAG oder Nd:YVO Verstärkerkette. Weiterhin ist ein Frequenzverdopplerkristall 63 vorgesehen, sowie Strahlteiler 64, 64' zur Trennung der fundamentalen Strahlung des Primärlasers λ₁-1,06 µm von der frequenzverdoppelten grünen Strahlung λ_{g}= 0,53 µm. Der optisch-parametrische-Oszillator 65 wird mit dem grünen Strahl λ_{g} gepumpt und so eingestellt, daß er zwei signal- und idler Strahlen (λₛ bzw. λᵢ) generiert, die eine geeignete Wellenlänge für eine anschließende Summenfrequenzbildung in Summenfrequenzgeneratoren 66, 67 aufweisen. Die Wellenlängen λₛ und λᵢ sind dabei so gewählt, daß die Summenfrequenzbildung mit den Strahlen der fundamentalen Wellenlänge des Lasers λₗ = 1,06 µm (bzw. 1,04 µm), die nach der Frequenzverdopplung übrig bleibt, zu geeigneten Wellenlängen von Rot und Blau führt. Die Farbe Grün wird dagegen als Teil der frequenz-verdoppelten Strahlung des Primärlaser über Abspaltung durch den einfachen Strahlteiler 64, 64' übernommen.

Der vorgeschlagene schnell gepulste q-geschaltete Laser 61 ist ein Dauerstrichlaseroszillator mit nur einer longitudinalen Grundmode, die in einem gepulsten Betrieb des Resonators betrieben wird. Ein Laser dieser Art ist z.B. ein diodengepumpter Festkörper-Micro-Chip-Laser wie z.B. Nd:YAG bei der Laserwellenlänge 1,06 µm mit einem so kurzen Resonator, daß er nur auf einer longitudinalen Mode anschwingt . Mit einem internen passiven Güteschalter, z.B. aus dem bekannten Cr⁴⁺:YAG-Material, kann er durch die Dotierung mit Cr⁴⁺-Ionen z.B. auf 20 kHz Pulsfrequenz mit einer Pulsdauer von 10 ns eingestellt werden.

Die IR-Emission des Lasers 61 wird nun in dem nachfolgendem Verstärker 62, z.B. mit dem Kristall Nd: YAG oder Nd:YVO₄, um ein Faktor 10-100 hochverstärkt, ohne daß störende höhere longitudinale Moden entstehen, auch bei Beibehaltung der guten Strahlqualität des Oszillators. Nach der Verstärkung wird der gepulste Strahl dann noch bis zu der erwünschten grünen Wellenlänge 532 nm frequenzverdoppelt, was hier in einem KTP-Kristall 63 geschieht. Nach der Frequenzverdopplung, die mit einer Effizienz von etwa 30% geschieht, bleibt ein Teil der Primärstrahlung mit einer Wellenlänge von 1,06 µm für die weitere Verwendung in anschließenden Stufen übrig.

Eine zweite Möglichkeit ist die Verwendung von passiv gütegeschalteten Nd:YAG - Ringlasern mit gleichem Cr⁴⁺-YAG-Güteschalter, ähnlicher Pulswiederholfrequenz, aber besserer Frequenzstabilität und höhere mittlere Leistung. Mit anschließenden Verstärkerstufen wie im vorigen Fall kann eine mittlere Leistung von 10-30 W in einer longitudinalen Mode erzeugt werden

Eine Möglichkeit liegt in der Verwendung eines mit einem akusto-optischen Schalter aktivgütegeschalteten Laser mit internem Etalon zur Einstellung eines Eimodenbetriebes, was aber gegenüber dem zweiten Verfahren etwas aufwendiger ist.

Q-geschaltete Dauerstrichlaser der hier beschriebenen Art haben eine Pulswiederholfrequenz von 10-20 kHZ, eine Pulsbreite von 5-20 ns und eine Frequenzbandbreite der Laseremission unter 100 MHz. Sie können mit einer Verstärkerstufe so ausgelegt werden daß nach der Frequenzverdopplung 1 W grüne Emission entsteht, und mit zwei oder drei Stufen bis 10 W grüne Strahlung und 30 W infrarote Strahlung im Mittel generiert wird. Nach der Konversion im optisch-parametrischen-Oszillator 65 und weiterer Frequenzverdopplung bzw. Summenfrequnzbildung können dann alle rgb-Strahlen mit einer mittleren Leistung von einigen Watt hergestellt werden. Ein wesentlicher Vorteil dieses Konzeptes ist auch, daß die Farben Blau und Rot durch Einstellung der Wellenlängen der Idler- und Signalwellenlänge λₛ, λᵢ im optisch-parametrischem-Oszillator 65 zur Anpassung an die Wellenlänge der späteren Bildprojektionslaser kontinuierlich verschoben werden können.

Mit den charakteristischen Laserdaten sind solche Lasersysteme für die Aufnahme der Bildschirmhologramme besonders gut geeignet. Beträgt z.B. die Pulsdauer des Lasers 10 ns und die Scangeschwindigkeit 5 m/sec, dann bewegt sich der Strahl während dieser Pulsdauer lateral um 5x 10⁻⁸ m, was 1/10 der Wellenlänge bei z.B. 500 nm entspricht. Diese kleine Verrückung hat keinen bemerkbaren Einfluß auf die Güte des Interferenzmusters in dem Hologramm haben. Wäre die Pulsfrequenz z.B. 20 kHz, würde sich der Strahl von Puls zu Puls bei dieser Scangeschwindigkeit um 1/4 mm fortbewegen. Die Kohärenzlänge eines Δt = 10 ns Einmoden Pulses beträgt etwa Δt c = 3 m, wobei c die Lichtgeschwindigkeit ist. Die Differenz der Laufwege des Objekt- und Referenzstrahles darf diesen Wert nicht überschreiten, was bei allen vorgeschlagenen Aufbauten der Hologramme leicht eingehalten werden kann.

Bildschirmhologramme können also entweder für eine Aufprojektion als Reflexionshologramm oder für eine Rückprojektion als Transmissionshologramm ausgelegt sein. Für beide Verfahren eignet sich entweder die Aufnahme im Kontaktverfahren mit dem reellen Bildschirm, oder als Bildebenenhologramm, d.h. nach einer Abbildung des Bildschirmes auf das Hologramm, wie oben dargestellt. In allen Fällen wird gleichzeitig der Objektstrahl und Referenzsstrahl synchron über das Hologramm bewegt.

Nur Lichtwellen mit gleicher linearer Polarisation können miteinander interferieren und als holographisches Abbild von Schirmen in einem Hologramm gespeichert werden, d.h. nur Lichtwellen der gleichen linearen Polarisation im Referenzstrahl und Objektstrahl können zur der Bilderzeugung des Bildschirmes beitragen. Vorzugsweise sind deshalb die für die Aufnahme der Hologramme verwendeten Laser streng linear polarisiert, um die Effizienz und Homogenität der Beleuchtung über die gesamte Hologrammfläche zu gewährleisten. Da die meisten Laser mit guter Strahlqualität von Hause aus streng linear polarisiert sind, bedeutet dies keine Einschränkung der Aufnahmetechnik.

Für die Aufnahme von Bildschirmen für stereoskopische Bildwiedergabe werden Bildschirmmaterialien verwendet, die einen drauffallenden linear polarisierten Lichtstrahl in Rückstreuung bzw. in Vorwärtsstreuung depolarisieren. Dies ist bei sehr vielen Leinwandmaterialien für Rückprojektion mit guter Oberflächenfeinrauhigkeit, bzw. leichter Volumenstreuung und bei fast allen Leinwänden mit starker Volumenstreuung für Rückprojektionen der Fall. Da der Referenzstrahl auch eine strenge lineare Polarisationsrichtung des Lasers hat, wird bei einer Aufnahme eines reellen Bildschirmes diese Polarisationsrichtung im Hologramm beibehalten. Werden nun von gleichem Schirm hintereinander zwei Aufnahmen gemacht, wobei die Polarisationsrichtung des Referenzstrahles von der einen zur anderen um 90° gedreht wird, entstehen im gleichen Bildschirmhologramm zwei unabhängige Schirmbilder, wobei jedes nur auf einen Projektionsstrahl mit bestimmter Polarisationsrichtung wirksam ist. Beide Schirmbilder sind auf zueinander orthogonale polarisierte Projektionsstrahlen wirksam. Damit sind die Voraussetzungen für die Projektion zueinander orthogonal polarisierter Stereobilder und ihre stereoskopische Betrachtung mit Polarisationsbrillen gegeben.

Die Umschaltung der Polarisation um 90° im Referenzstrahl kann in einer sehr einfachen Weise durch Drehen einer λ/2-Platte im Strahlengang hinter der Austrittsapertur eines streng linear polarisierten Beleuchtungslasers durchgeführt werden.

Werden mehrere Bildschirmaufnahmen vom gleichen Schirm hintereinander in das gleiche Hologramm bei verändertem Ort des ganzen Schirmes oder des Ursprungsort des Referenzstrahles gemacht, dann überlagern sich störende Specklebilder kohärent mit statistischer Größenverteilung. In der Summe stellen sie nach den Belichtungen einen neuen virtuellen Schirm dar, der eine wesentlich höhere Feinstruktur als die reelle Schirmvorlage hat. Dies führt zu einer Verschiebung des ganzen Erscheinungsbildes zu größeren Speckles, die dann bei der anschließenden Bildwiedergabe durch leichte örtliche oder zeitliche Modulation des Projektionsstrahles leichter behoben werden können. Es wird also die Eigenschaft von Hologrammen genutzt, mehrere Bilder mit leicht veränderten Aufnahmebedinungen übereinander aber unabhängig voneinander im gleichen Hologramm zu speichern. Auch bei Bildschirmhologrammen, die mit gepulsten Lasern aufgenommen werden, kann so die Größe der störenden Bildspeckles, die bei der Bildwiedergabe mit Lasern entstehen, verändert werden.

## Patentansprüche

1. Verfahren zur Herstellung von Bildschirmhologrammen, bei dem ein realer Bildschirm (11; 31; 41; 51) mit schmalbandigem Licht beleuchtet und in einem holographischen Aufnahmematerial (12; 32; 42; 52) als Hologramm gespeichert wird, wobei eine Vielzahl von Einzelaufnahmen durchgeführt wird, bei denen jeweils nur ein Teilbereich (11a) des realen Bildschirms (11; 31; 41; 51) beleuchtet wird, so dass sich durch Zusammensetzung und/oder Überlagerung der Einzelaufnahmen das Bildschirmhologramm des gesamten Bildschirms ergibt,
**dadurch gekennzeichnet,**
**daß** die Beleuchtung des Bildschirms (11; 31; 41; 51) mit einem scannenden, gepulsten Laserstrahl (13; 33; 43; 53) erfolgt.

2. Verfahren nach Anspruch 1, **dadurch gekennzeichnet, daß** die Pulsdauer derart bemessen ist, daß die Bewegung des Laserstrahls (13; 33; 43; 53) über den Bildschirm (11; 31; 41; 51) keinen Einfluß auf die Interferenz der Lichtwellen im Hologramm hat.

3. Verfahren nach einem oder mehreren der vorhergehenden Ansprüche, **dadurch gekennzeichnet, daß** die aufgenommenen Teilbereiche (11a) des Bildschirms (11; 31; 41; 51) mindestens der Größe von Bildpixeln entsprechen.

4. Verfahren nach einem oder mehreren der vorhergehenden Ansprüche, **dadurch gekennzeichnet, daß** die Belichtung mit einem gepulsten, diodengepumpten Festkörperdauerstrichlaser (16) erfolgt.

5. Verfahren nach einem oder mehreren der vorhergehenden Ansprüche, **dadurch gekennzeichnet, daß** eine Frequenzkonversion in einen oder mehrere der Wellenlängenbereiche rot, grün, blau erfolgt.

6. Verfahren nach einem oder mehreren der vorhergehenden Ansprüche, **dadurch gekennzeichnet, daß** ein Kontakthologramm oder ein Bildschirmebenenhologramm erzeugt wird.

7. Verfahren nach einem oder mehreren der vorhergehenden Ansprüche, **dadurch gekennzeichnet, daß** Laserstrahlen (13; 33; 43; 53) mit einer Kohärenzlänge erzeugt werden, die größer ist als die Differenz der Lichtwege zwischen Objektstrahl und Referenzstrahl.

8. Verfahren nach einem oder mehreren der vorhergehenden Ansprüche, **dadurch gekennzeichnet, daß** Scangeschwindigkeit und Pulsdauer so aufeinander abgestimmt sind, daß die Bewegung des Laserstrahls (13; 33; 43; 53) während eines Pulses kleiner ist als 1/10 der Wellenlänge.

9. Verfahren nach einem oder mehreren der vorhergehenden Ansprüche, **dadurch gekennzeichnet, daß** ein mehrmaliges Abscannen der Bildschirmfläche mit jeweils phasenverschobenem Laserstrahl (13; 33; 43; 53) erfolgt

10. Verfahren nach einem oder mehreren der vorhergehenden Ansprüche, **dadurch gekennzeichnet, daß** die Verteilung der Belichtung im Hologramm gemessen wird um bei einem nachfolgenden Belichtungszyklus die Belichtung zu korrigieren.

11. Verfahren nach einem oder mehreren der vorhergehenden Ansprüche, **dadurch gekennzeichnet, daß** mehrere Belichtungen mit senkrecht zueinander polarisierten Licht- oder Laserstrahlen (13; 33; 43; 53) durchgeführt werden um zwei voneinander unabhängige Schirmbilder in dem Hologramm (12; 32; 42; 52) zu erzeugen.

12. Verfahren nach einem oder mehreren der vorhergehenden Ansprüche, **dadurch gekennzeichnet, daß** mehrere Belichtungen mit veränderten Aufnahmeparametern wie beispielsweise verändertem Ort des realen Bildschirms oder verändertem Ursprungsort des Referenzstrahls durchgeführt werden.

13. Verfahren nach einem oder mehreren der vorhergehenden Ansprüche, **dadurch gekennzeichnet, daß** die Belichtung gleichzeitig durch Licht- oder Laserstrahlen (13; 33; 43; 53) der Grundfarben rot, grün, blau erfolgt, die auf einer Strahlachse koaxial justiert sind.

14. Vorrichtung zur Herstellung von Bildschirmhologrammen, mit einer schmalbandigen Lichtquelle (16; 39; 49; 59; 60) zur Beleuchtung eines realen Bildschirms (11; 31; 41; 51), die so angeordnet ist, daß sich das vom Bildschirm ausgehende Licht (17; 30; 40; 50) mit einem Referenzstrahl überlagert um ein Hologramm des Bildschirms (11; 31; 41; 51) zu erzeugen,
**gekennzeichnet durch**
eine Scanvorrichtung (14, 15; 34, 35; 47, 48, 47 ', 48'; 57, 58) zum Führen der von der Lichtquelle (16; 39; 49; 59; 60) ausgehenden Lichtstrahlung über den Bildschirm (11; 31; 41; 51), wobei die Lichtquelle (16; 39; 49; 59; 60) gepulste Lichtstrahlung erzeugt und die Scanvorrichtung (14, 15; 34, 35; 47, 48, 47 ', 48'; 57, 58) so angeordnet ist, dass das Bildschirmhologramm eine Vielzahl von Einzelaufnahmen enthält, in denen jeweils ein Teilbereich (11a) des realen Bildschirms (11; 31; 41; 51) als Hologramm abgebildet ist, so dass sich das gesamte Bild des Bildschirms (11; 31; 41; 51) **durch** Zusammensetzung der Einzelaufnahmen ergibt.

15. Vorrichtung nach Anspruch 14, **dadurch gekennzeichnet, daß** die Lichtquelle (60) gleichzeitig rote, grüne und blaue Laserstrahlung erzeugt.

16. Vorrichtung nach Anspruch 14 oder 15, **dadurch gekennzeichnet, daß** die Lichtquelle (60) ein Lasersystem umfaßt, mit
einer Laserstrahlquelle (61, 62), die einen gepulsten, q-geschalteten Einfrequenz-IR-Laser-Oszillator (61) umfaßt,
einer Frequenzkonversionseinrichtung (63), und
einem optisch-parametrischen Oszillator (65).

17. Vorrichtung nach Anspruch 16, **dadurch gekennzeichnet, daß** die Laserstrahlquelle einen Laserverstärker (62) umfaßt, der dem q-geschalteten Einfrequenz-IR-Laseroszillator (61) nachgeschaltet ist.

## Claims

1. Method of producing screen holograms, in which a real screen (11; 31; 41; 51) is illuminated with narrow-band light and stored in a holographic recording material (12; 32; 42; 52) as a hologram, multiple recordings, in each of which only a partial area (11a) of the real screen (11; 31; 41; 51) is illuminated, being carried out, so that by combining and/or overlaying the individual recordings the screen hologram of the whole screen results,
**characterized in that**
the screen (11; 31; 41; 51) is illuminated by a scanning, pulsed laser beam (13; 33; 43; 53).

2. Method according to Claim 1, **characterized in that** the pulse duration is dimensioned in such a way that the movement of the laser beam (13; 33; 43; 53) over the screen (11; 31; 41; 51) has no effect on the interference of the light waves in the hologram.

3. Method according to one or more of the preceding claims, **characterized in that** the recorded partial areas (11a) of the screen (11; 31; 41; 51) are at least the size of pixels.

4. Method according to one or more of the preceding claims, **characterized in that** the illumination is done by a pulsed, diode-pumped solid-state continuous wave laser (16).

5. Method according to one or more of the preceding claims, **characterized in that** a frequency conversion takes place in one or more of the wavelength ranges red, green, blue.

6. Method according to one or more of the preceding claims, **characterized in that** a contact hologram or.screen plane hologram is generated.

7. Method according to one or more of the preceding claims, **characterized in that** laser beams (13; 33; 43; 53) are generated with a coherence length which is greater than the difference of the light paths between object beam and reference beam.

8. Method according to one or more of the preceding claims, **characterized in that** the scan rate and pulse duration are tuned to each other in such a way that the movement of the laser beam (13; 33; 43; 53) during a pulse is less than 1/10 of the wavelength.

9. Method according to one or more of the preceding claims, **characterized in that** the screen surface is scanned multiple times with a laser beam (13; 33; 43; 53) which is phase-shifted each time.

10. Method according to one or more of the preceding claims, **characterized in that** the distribution of the illumination in the hologram is measured, to correct the illumination in a subsequent illumination cycle.

11. Method according to one or more of the preceding claims, **characterized in that** multiple illuminations are carried out with light or laser beams (13; 33; 43; 53) polarised perpendicularly to each other, to generate two mutually independent screen images in the hologram (12; 32; 42; 52).

12. Method according to one or more of the preceding claims, **characterized in that** multiple illuminations with changed recording parameters, e.g. changed location of the real screen or changed origin of the.reference beam, are carried out.

13. Method according to one or more of the preceding claims, **characterized in that** the illumination is done simultaneously by light or laser beams (13; 33; 43; 53) of the primary colours red, green, blue, which are adjusted coaxially on a beam axis.

14. Device for producing screen holograms, with a narrow-band light source (16; 39; 49; 59; 60) to illuminate a real screen (11; 31; 41; 51), which is arranged so that light from the screen (17; 30, 40; 50) is overlaid with a reference beam to generate a hologram of the screen (11; 31; 41; 51),
**characterized by**
a scanning device (14, 15; 34, 35; 47, 48, 47', 48'; 57, 58) to guide the light radiation from the light source (16; 39; 49; 59; 60) via the screen (11; 31; 41; 51), the light source (16; 39; 49; 59; 60) generating pulsed light radiation, and the scanning device (14, 15; 34, 35; 47, 48, 47', 48'; 57, 58) being arranged so that the screen hologram includes multiple individual recordings, in each of which a partial area (11a) of the real screen (11; 31; 41; 51) is mapped as a hologram, so that the whole image of the screen (11; 31; 41; 51) results from combining the individual recordings.

15. Device according to Claim 14, **characterized in that** the light source (60) generates red, green and blue light radiation simultaneously.

16. Device according to Claim 14 or 15, **characterized in that** the light source (60) includes a laser system, with:
a laser beam source (61, 62), which includes a pulsed,
q-switched one-frequency IR laser oscillator (61),
a frequency conversion device (63), and
an optical-parametric oscillator (65).

17. Device according to Claim 16, **characterized in that** the laser beam source includes a laser amplifier (62), which is connected downstream from the q-switched one-frequency IR laser oscillator (61).

## Revendications

1. Procédé de fabrication d'hologrammes d'écran pour lequel un écran réel (11 ; 31 ; 41 ; 51) est éclairé à l'aide d'une lumière en bande étroite et est enregistré sous forme d'hologramme dans un matériel d'enregistrement holographique (12 ; 32 ; 42 ; 52), dans lequel une multitude d'enregistrements individuels est réalisée, pour lesquels seule une partie (11a) de l'écran réel (11 ; 31 ; 41 ; 51) est éclairée à chaque fois de manière à ce que l'hologramme d'écran de l'ensemble de l'écran soit obtenu par réunion et/ou superposition des enregistrements individuels,
**caractérisé en ce que**
l'éclairage de l'écran (11 ; 31 ; 41 ; 51) est effectué à l'aide d'un faisceau laser pulsé balayant (13 ; 33 ; 43 ; 53).

2. Procédé selon la revendication 1, **caractérisé en ce que** la durée d'impulsion est déterminée de telle manière que le mouvement du faisceau laser (13 ; 33 ; 43 ; 53) sur l'écran (11 ; 31 ; 41 ; 51) n'a aucune influence sur l'interaction des ondes lumineuses dans l'hologramme.

3. Procédé selon l'une ou plusieurs des revendications précédentes, **caractérisé en ce que** les parties enregistrées (11a) de l'écran (11 ; 31 ; 41 ; 51) correspondent au moins à la taille des pixels de l'image.

4. Procédé selon l'une ou plusieurs des revendications précédentes, **caractérisé en ce que** l'exposition est effectuée à l'aide d'un laser solide continu pulsé et pompé par diode (16).

5. Procédé selon l'une ou plusieurs des revendications précédentes, **caractérisé en ce qu'**une conversion de fréquence est effectuée dans une ou plusieurs des gammes de longueurs d'onde rouge, verte, bleue.

6. Procédé selon l'une ou plusieurs des revendications précédentes, **caractérisé en ce qu'**un hologramme de contact ou un hologramme de plan d'écran est généré.

7. Procédé selon l'une ou plusieurs des revendications précédentes, **caractérisé en ce que** les faisceaux laser (13 ; 33 ; 43 ; 53) sont générés avec une longueur de cohérence qui est supérieure à la différence des chemins optiques entre le faisceau objet et le faisceau de référence.

8. Procédé selon l'une ou plusieurs des revendications précédentes, **caractérisé en ce que** la vitesse de balayage et la durée d'impulsion sont accordées l'une à l'autre de manière à ce que le mouvement du faisceau laser (13 ; 33 ; 43 ; 53) au cours d'une impulsion soit inférieur à 1/10 de la longueur d'onde.

9. Procédé selon l'une ou plusieurs des revendications précédentes, **caractérisé en ce qu'**un balayage répété de la surface de l'écran est effectué chaque fois à l'aide d'un faisceau laser déphasé (13 ; 33 ; 43 ; 53).

10. Procédé selon l'une ou plusieurs des revendications précédentes, **caractérisé en ce que** la répartition de l'exposition est mesurée dans l'hologramme afin de corriger l'exposition en cas de cycle d'exposition subséquent.

11. Procédé selon l'une ou plusieurs des revendications précédentes, **caractérisé en ce que** plusieurs expositions sont réalisées à l'aide de faisceaux laser ou lumineux (13 ; 33 ; 43 ; 53) polarisés perpendiculairement l'un à l'autre afin de générer deux images d'écran indépendantes l'une de l'autre dans l'hologramme (12 ; 32 ; 42 ; 52).

12. Procédé selon l'une ou plusieurs des revendications précédentes, **caractérisé en ce que** plusieurs expositions sont réalisées à l'aide de paramètres d'enregistrement modifiés tels que, par exemple, la modification de l'emplacement de l'écran réel ou la modification de l'emplacement d'origine du faisceau de référence.

13. Procédé selon l'une ou plusieurs des revendications précédentes, **caractérisé en ce que** l'exposition est effectuée simultanément par les faisceaux laser ou lumineux (13 ; 33 ; 43 ; 53) des couleurs primaires rouge, vert, bleu, qui sont ajustés de manière coaxiale sur un axe de faisceau.

14. Dispositif de fabrication d'hologrammes d'écran avec une source de lumière à bande étroite (16 ; 39 ; 49 ; 59 ; 60) destinée à l'éclairage d'un écran réel (11 ; 31 ; 41 ; 51) qui est disposé de manière à ce que la lumière (17 ; 30 ; 40 ; 50) émanant de l'écran se superpose avec un faisceau de référence afin de générer un hologramme de l'écran (11 ; 31 ; 41 ; 51),
**caractérisé par**
un dispositif de balayage (14, 15 ; 34, 35 ; 47, 48, 47', 48' ; 57, 58) destiné à guider le faisceau lumineux émanant de la source de lumière (16 ; 39 ; 49 ; 59 ; 60) sur l'écran (11 ; 31 ; 41 ; 51), dans lequel la source de lumière (16 ; 39 ; 49 ; 59 ; 60) génère un faisceau lumineux pulsé et le . dispositif de balayage (14, 15 ; 34, 35 ; 47, 48, 47', 48' ; 57, 58) est disposé de manière à ce que l'hologramme d'écran contienne une multitude d'enregistrements individuels dans lesquels une partie (11a) de l'écran réel (11 ; 31 ; 41 ; 51) est représentée sous forme d'hologramme de manière à ce que l'ensemble de l'image de l'écran (11 ; 31 ; 41 ; 51) soit obtenu par la réunion des enregistrements individuels.

15. Dispositif selon la revendication 14, **caractérisé en ce que** la source de lumière (60) génère simultanément un faisceau laser rouge, vert et bleu.

16. Dispositif selon la revendication 14 ou 15, **caractérisé en ce que** la source de lumière (60) comprend un système laser avec
une source de faisceau laser (61, 62) qui comprend un oscillateur laser infrarouge à une fréquence monté transversalement (61),
un dispositif de conversion de fréquence (63), et
un oscillateur paramétrique optique (65).

17. Dispositif selon la revendication 16, **caractérisé en ce que** la source de faisceau laser comprend un amplificateur .laser (62) qui est placé en aval de l'oscillateur laser infrarouge à une fréquence monté transversalement (61).
